# EUROPEAN PATENT APPLICATION

(11) **EP 4 151 879 A1**
(43) Date of publication of application: **22.03.2023**
(21) Application number: 21275131.7
(22) Date of filing: 15.09.2021
(51) Int. Cl.: F16F 7/104, F16F 1/10

(54) **RESONATOR, RESONATOR ARRAY, VIBRATION CONTROL SYSTEM AND METHOD**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

According to the present invention there is provided a resonator comprising: a base attachable to an external body; a control element; and one or more connection elements each having a resilient spiral portion, wherein the control element is resiliently connected to the base by the one or more connection elements such that relative movement between the control element and the base is facilitated by the one or more connection elements.

## Description

### FIELD

The present invention relates to a resonator, a resonator array comprising a plurality of resonators, a vibration control system comprising a resonator, and associated vehicles, structures and methods.

### BACKGROUND

The vibrations of heavy machinery, for example engines, during their operation can have an adverse effect on the bodies or structures on which said machinery is mounted. For example, the vibration of an engine mounted in vehicles including aircraft, watercraft and land-going vehicles, can impact vehicle efficiency, accuracy of instrumentation, vehicle noise, and stability.

Vibration control systems are desirable in many settings in order to mitigate the impact of the vibration. Vibration control systems provide a level of damping or operate to reduce the impact of vibrations. Some vibration control systems can also simultaneously harvest the kinetic energy from the vibrations and store it for later use. However, commercially available systems are complex, over-sized, or provide insufficient control or damping. This may be due to issues relating to the components, for example resonators, employed in said vibration control systems.

### SUMMARY

According to a first aspect of the present invention, there is provided a resonator comprising: a base attachable to an external body; a control element; and one or more connection elements each having a resilient spiral portion, wherein the control element is resiliently connected to the base by the one or more connection elements such that relative movement between the control element and the base is facilitated by the one or more connection elements.

In one example, the resonator comprises an odd number of connection elements.

In one example, the resonator comprises a plurality of connection elements, preferably three connection elements.

In one example, the one or more connection elements each connect to the control element at a point of connection, wherein the points of connection are equidistantly spaced.

In one example, the control element extends around at least a part of the one or more connection elements when the connection elements are in an equilibrium position.

In one example, at least a part of the one or more connection elements and the control element are located in the same plane in an equilibrium position.

In one example, the spiral portion of each connection element spirals in the same direction.

In one example, each connection element has an axis along which the spiral portion is displaceable to provide relative displacement between the control element and the base.

In one example, the control element comprises a proof-mass, optionally wherein the control element has an annular form.

In one example, the base has an annular form.

In one example, the connection element is connected to the control element at an angle away from normal.

In one example, the total number of points of connection between the or each connection element and the control element is three.

In one example, each connection element comprises a support on which the resilient spiral portion is mounted.

In one example, the control element is connected only to the one or more connection elements.

According to a second aspect of the present invention, there is provided a resonator array comprising: a plurality of resonators according to the first aspect of the present invention.

In one example, in the resonator array, the bases of the resonators are connected by a framework.

In one example, two or more of the plurality of resonators have: the same resonance frequency; and/or different resonance frequencies.

According to a third aspect of the present invention, there is provided a vibration control system comprising: a resonator according to the first aspect of the present invention, or a resonator array according to the second aspect of the present invention.

In one example, the vibration control system comprises a driving mechanism for providing a displacing force.

In one example, the vibration control system comprises a tuning mechanism for tuning the resonator.

According to a fourth aspect of the present invention, there is provided a vehicle or structure comprising a resonator according to the first aspect of the present invention, a resonator array according to the second aspect of the present invention and/or a vibration control system according to the third aspect of the present invention. The vehicle may be an aircraft, watercraft or land-going vehicle.

According to a fifth aspect of the present invention, there is provided a method of controlling vibration comprising: using a resonator according to the first aspect of the present invention, a resonator array according to the second aspect of the present invention and/or a vibration control system according to the third aspect of the present invention to control vibration of a body.

In one example, the method comprises configuring the resonator, resonator array and/or vibration control system to have a resonance frequency which corresponds with a target frequency of a situation in which the resonator is to be employed.

According to a sixth aspect of the present invention, there is provided a method of manufacturing a resonator according to the first aspect of the present invention, a resonator array according to the second aspect of the present invention and/or a vibration control system according to the third aspect of the present invention comprising manufacturing the resonator, resonator array and/or vibration control system to have a resonance frequency which corresponds with a target frequency of a situation in which the resonator, resonator array and/or vibration control system is to be employed.

According to a seventh aspect of the present invention, there is provided a vehicle or structure comprising: a source of vibration; and a resonator according to the first aspect of the present invention, a resonator array according to the second aspect of the present invention and/or a vibration control system according to the third aspect of the present invention. In one example, the source of vibration is provided by the vehicle or structure. In one example, the source of vibration is provided by a driving mechanism.

It will of course be appreciated that features described in relation to one aspect of the present invention may be incorporated into other aspects of the present invention. Other preferred and advantageous features of the invention will be apparent from the following description.

### BRIEF DESCRIPTION OF THE FIGURES

Embodiments of the invention will now be described by way of example only with reference to the figures, in which:
Figure 1 shows a perspective view of a resonator;
Figure 2 shows a side view of the resonator of Figure 1 in cross section along the line A - A in the direction of the arrows;
Figure 3 shows an exploded view of the resonator of Figure 1;
Figure 4 shows a plan view of the resonator of Figure 1;
Figure 5 show a plan view of a control element and connection element;
Figure 6a and 6b shows a side view of the resonator of Figure 1 attached to external bodies;
Figure 7 shows a resonator array;
Figure 8 shows a pocketed resonator array;
Figure 9a and 9b shows a vehicle and structure;
Figure 10 shows general methodology principles; and
Figure 11 shows general methodology principles.

### DETAILED DESCRIPTION

Referring to the figures, a resonator 1 is shown.

The resonator 1 is a component which is arranged to move (including vibrate or oscillate) when acted upon (for example, driven) by, or in response to, an external force. The resonator 1 is attachable to an external body. Vibration of the external body applies an external force on the resonator 1 which induces vibration of the resonator 1. Vibration of the resonator 1 thereby results in the application of a force on the external body to which the resonator 1 is attached. The force applied by the resonator 1 on the external body acts to control, or affect, the vibration of the external body. As a result, the resonator 1 may be described as a vibration control component.

The resonator 1 is arranged (e.g. designed) to move with a maximum displacement amplitude at a resonance frequency. However, it will be understood by the skilled person that benefits of the invention may still be obtained when the resonator 1 is not operated at a resonance frequency. In such use cases, the displacement of the resonator 1 is less than a maximum amplitude but may still be significant such that vibration control is achieved. Nevertheless, the resonator 1 may be configured to have a resonance frequency which corresponds to a target frequency of a situation in which the resonator 1 is to be employed. That is, the resonator 1 is configured to have a resonance frequency which corresponds with a frequency of vibration of an external body to which the resonator 1 is to be attached, or to which the external body is to be exposed.

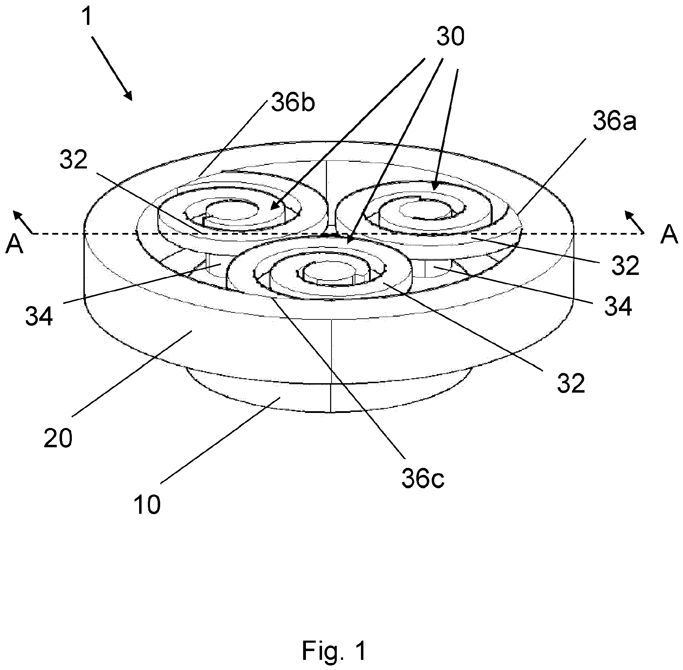

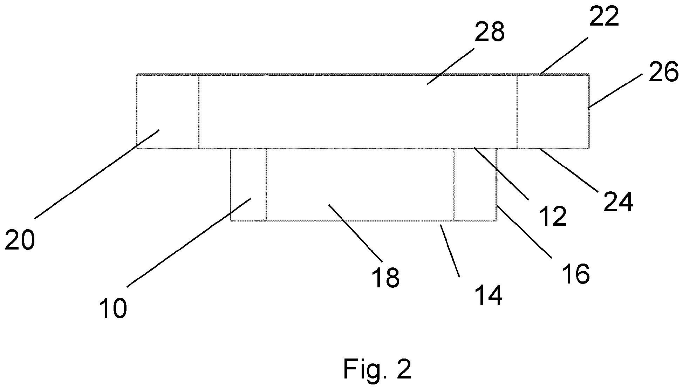

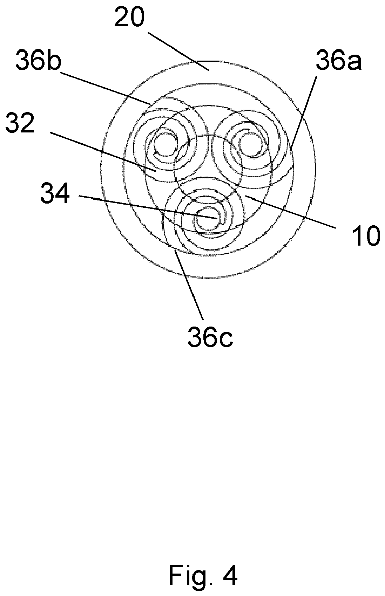

Referring to Figures 1 to 4, the resonator 1 comprises a base 10. The base 10 is attachable to an external body. As will be described in further detail herein, the external body may be, for example, a part of: a vibration control system; a framework; a vehicle and/or a structure. The base 10 has an annular form having a top surface 12, a bottom surface 14, an outer side surface 16 and an inner side surface 18. Advantageously, the base 10 providing an inner side surface facilitates attachment to an external body, such as an actuator, which in this embodiment is by virtue of its annular form. Other forms may also facilitate attachment of the base 10 to an annular body, for example a disc, or a solid form comprising a recess or an aperture extending therethrough. In other exemplary embodiments, the base 10 may be attached to an external body by an adhesive, applied to or in the region of the base 10. Additionally, the base 10 having an annular form advantageously reduces the mass of the resonator 1, thereby providing a more lightweight component.

The resonator 1 further comprises a control element 20. In this example, the control element 20 is a passive control element in the form of a proof-mass (which may alternatively be referred to as a mass member). By providing such a control element 20, a robust and simplified resonator 1 is provided. The mass (and perhaps even shape) of the proof-mass can be selected to adjust the resonance frequency of the resonator 1. For example, different masses could be used for different applications, or scenarios. The control element 20 has an annular form having a top surface 22, a bottom surface 24, an outer side surface 26 and an inner side surface 28.

The resonator 1 further comprises one or more connection elements 30. The control element 20 is resiliently connected to the base 10 by the one of more connection elements 30. In this way, relative movement between the control element 20 and the base 10 is facilitated by the one or more connection elements 30. The control element 20 is contacted only by the one or more connection elements 30. In this way, the control element 20 is able to move by virtue of the resilient connection to the base 10 via the connection elements 30. Such a construction provides for a simplified resonator construction.

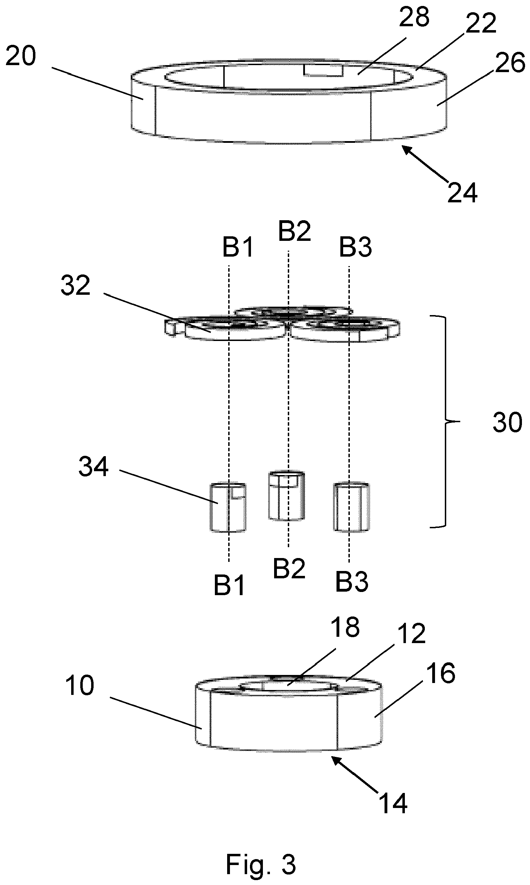

A key feature is that each connection element 30 has a resilient spiral portion 32. Advantageously, a spiral shaped connection element exhibits lateral stability. Further advantageously, a spiral shaped connection element with spiral arm width of a similar or greater order to the spiral arm thickness exhibits significantly greater lateral stiffness compared to vertical stiffness. Moreover, a spiral portion 32 is a compact construction which facilitates displacement of the connection element and resilient connection of the base 10 and control element 20. That is, the spiral portion 32 is compact in comparison to, say, a helix-like structure of constant radius (e.g. a coil spring). The spiral portion 32 winds in a continuous and gradually widening curve around a central point on a flat plane, when the connection element 30 is in an equilibrium position. When the connection element 30 is out of equilibrium, for example when the resonator 1 is exhibiting movement, the spiral portion 32 may take the form of, or trace along an outer virtual surface or path of, a cone, as the winding of the spiral portion 32 is about an axis, for example the axes B1 - B1, B2 - B2 and B3 - B3 as shown in Figure 3. That is, each connection element 30 has an axis along which the spiral portion 32 is displaceable to provide relative displacement between the base 10 and the control element 20. That is, when the resonator 1 is exhibiting movement, the spiral portion 32 may stretch, or deform, vertically upwards and vertically downwards relative to its equilibrium position in an alternate, oscillatory, manner. The spiral portion 32 exhibits axial movement. In some embodiments, the equilibrium position may be such that the spiral portion 32 has a conical form, rather than flat as illustrated in the figures. However, the spiral portion 32 having a flat form in an equilibrium position is beneficial in achieving stability, predictability of movement, and also in simplifying manufacture of the spiral portion 32 (in particular when additive manufacture is employed.

The spiral portion 32 is a curve of decreasing radius, which results in a compact form and desirable performance. The spiral could be formed of one or more linear portions, or different connected sub-portions. This might still offer benefits, in terms of a general spiral form. However, a curve of decreasing radius will likely have better or more easily predictable/controllable performance, in terms of vibrational modes.

Each connection element 30 further comprises a support 34 in the form of an elongate rod or extension. Each support 34 extends along respective axis B1 - B1, B2 - B2, B3 - B3. Each support 34 connects at a first end to the respective connection element 30 at a central point, or region. The first end is an uppermost end of the support 34. The spiral portion 32 spirals, or winds, outwardly in a plane at the uppermost end of the support 34. Each support 34 connected at a second, opposite, end to the top surface 12 of the base 10. The second end is a lowermost end of the support 34.

In one exemplary embodiment, the control element 20 and connection elements 30 are formed as a one-piece construction. The control element 20 and connection elements 30 may be formed by additive layer manufacturing (ALM) or by injection moulding. In another exemplary embodiment, the base 10, control element 20 and connection elements 30 are all formed as a one-piece construction. Again, ALM or injection moulding may be used as a manufacturing process.

In one exemplary embodiment, the control element 20 forms part of the connection element 30, and an outer region of the spiral portion 32 provides the control element 20. Such a construction may be described as an integrated control element 20 and connection element 30. ALM or injection moulding may be employed as a manufacturing process to provide an integrated control element 20 and connection element 30. However, in the embodiment shown in the figures, the control element 20 is a separate component to the connection elements 30 and is subsequently connected thereto.

The resonator 1 comprises three connection elements 30. Advantageously, by providing a plurality of connection elements 30, stability of the control element 20 is achieved. Three connection elements 30 have been found as an optimum balance of size or footprint of the resonator 1 and stability of the resonator 1. That is, providing a plurality of connection elements 30, particularly three connection elements 30, prevents the control element 20 from rocking (i.e. exhibiting movement in a non-vertical axis, that is, an axis which is not parallel to the B-B axes).

Many of the above advantages, e.g. in terms of stability, may be true of any odd number (greater than one) of connection elements, but three elements strikes the balance multiple requirements (e.g. size, compactness, stability).

A free end of the spiral portion 32 of each of the three connection elements 30 connects to the control element 20 at a point, or region, of connection 36a, 36b, 36c. Each point of connection 36a - 36c is at the inner side surface 28 of the control element 20. The three points of connection are equidistantly spaced along the inner side surface 28. Stability and predictability of the resonator response is improved by providing equidistantly spaced points of connection, even more so when there are an odd number of points. The spiral portion 32 of each connection element 30 spirals, or winds, in the same direction. Not only does this provide a simpler construction, but might also balance the resistive forces of the connection elements 30 to lateral displacements of the control element 20.

The free end of the spiral portion 32 of each connection element 30 connects to the control element 20 at an angle away from normal. That is, the free end of the spiral portion 32 does not abut the inner side surface 28 of the control element 20 perpendicularly, but rather connects or adjoins at an angle. In this way, by the connection elements 30 connecting to the control element at an angle, there is a reduced probability of the control element 20 and connection element 30 being broken apart due to the vibrational forces to which the resonator 1 is subjected.

The control element 20 extends around the spiral portion 32 of the one or more connection elements 30 when the resonator 1 is in an equilibrium position. That is, when the resilient connection elements 30 are not displaced from equilibrium, the control element 20 extends around the connection elements 30. In this way, the control element 20 encompasses the one or more connection elements 30. Such a construction improves the stability of the resonator 1, whilst ensuring it has a compact spatial footprint.

The control element 20 and the spiral portions 32 of the one or more connection elements 30 are located in the same plane in an equilibrium position. That is, when the resilient connection elements 30 are not displaced from equilibrium, a horizontal plane intersects the spiral portions 32 and the control element 20. Such a construction improves the stability of the resonator 1, whilst ensuring it is spatially compact.

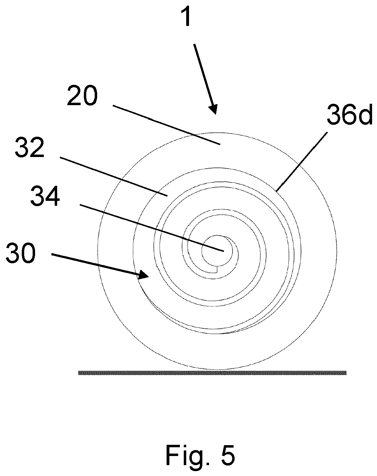

Referring to Figure 5, the resonator 1 comprises a base 10 (not shown) and a control element 20. However, in this illustrated embodiment, the resonator 1 comprises a single (i.e. one) connection element 30. The connection element 30 connects to the control element 20 at a point, or region, of connection 36d. The point of connection 36d is at the inner side surface 28 of the control element 20. Advantageously, a resonator 1 incorporating only a single connection element 30 is a lightweight and simple to manufacture construction. It will be understood that issues with stability may be noticeable, and so a plurality of connection elements 30 may be preferred. However, the lack of stability may be mitigated by connecting the single connection element 30 to the control element 20 at a plurality of points along the inner side surface 28 of the control element 20, or along a region 36d of the control element 20 as is shown in the figure. It will be understood by the skilled person that all the features of the embodiments having a plurality of connection elements 30 could be included in the embodiment having one connection element 30.

In all embodiments (i.e. irrespective of the number of connection elements) the resonator 1 can be tuned by adjusting or selecting the mass of the control element 20, or by selecting an appropriate thickness of the one or more connection elements 30. That is, the mass of the control element 20 or thickness of the one or more connection elements 30 will relate to the resonance frequency of the resonator 1. It is desirable to provide a resonator 1 having a resonance frequency that is suited to the situation in which the resonator 1 is to be employed. It is often beneficial to match the resonance frequency of the resonator 1 with a frequency or frequencies of vibration of an external body that it is desired to control the vibration of, or to a vibration that the resonator is to be exposed to (e.g. environmental, for damping or harvesting).

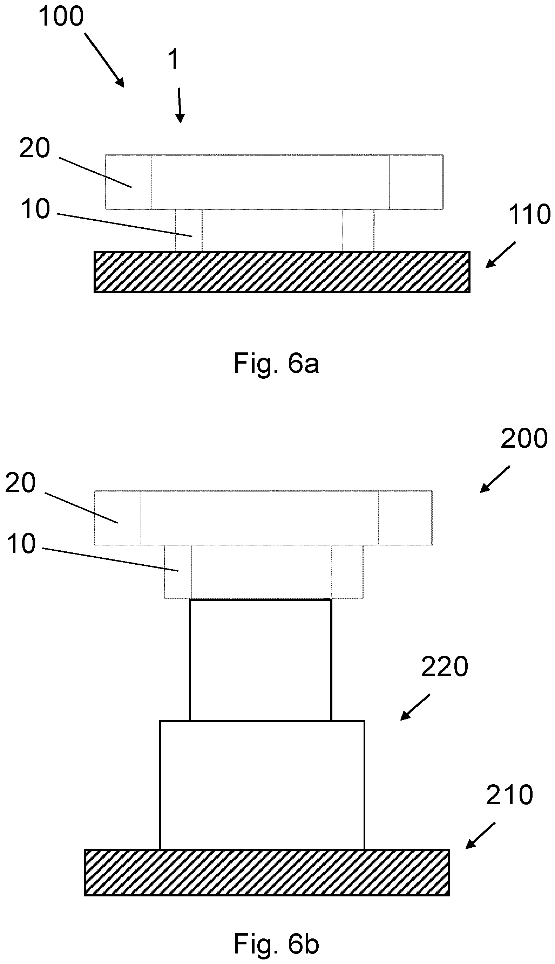

Referring to Figures 6a and 6b, in one exemplary embodiment, the resonator 1 is a vibration control component for a vibration control system (indicated generally at 100, 200). The vibration control system 100, 200 is a system for controlling vibrations of a vibrating external body. A part of the external body, such as a panel, is indicated at 110 and 210. In an exemplary embodiment, the vibration control system 100, 200 is configured to operate as an energy harvester, and comprises the necessary componentry to provide energy harvesting functionality. In another exemplary embodiment, the vibration control system 100, 200 comprises a driving mechanism for controlling vibrations by providing a driving force, such as an actuator 220. In this way, external vibrations can be controlled by destructive interference of the vibration of the resonator 1 and the vibration of an external body to which the resonator is directly or indirectly attached. The energy harvesting components, or mechanism, or driving mechanism, can operate as a tuning mechanism for tuning the resonator, by, for example, tuning the resonance frequency of the resonator 1. The apparatus of the vibration control system 100, 200 (for example, energy harvesting apparatus and/or driving apparatus) may be incorporated (i.e. integral) in the resonator 1, or may be provided on the outer surfaces of components of the resonator 1. The driving mechanism may provide a source of vibration. Alternatively, or additionally, the vehicle or structure itself may provide the source of vibration

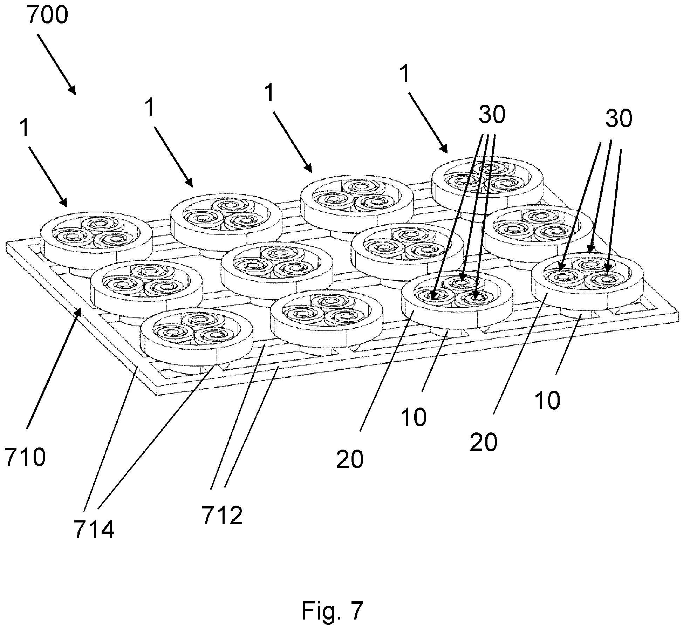

Referring to Figure 7, a resonator array 700 is shown. The resonator array 700 comprises a plurality of resonators 1. The resonator array 700 further comprises a framework 710 comprising a set of first framework members 712 and a set of second framework members 714. The first framework members 712 and second framework members 714 extend perpendicularly to one another. The first framework members 712 and second framework members 714 connect to the bases 10 of the resonators 1, and thereby connect the bases 10 of the resonators 1 to one another in an array formation. A base 10, or bases, of the plurality of resonators 1 can be attached to an external body. Vibration of the external body thereby causes all resonators of the resonator array 700 to vibrate. It will be understood by the skilled person that the framework 710 may instead be attached to an external body, and vibration of the external body will cause the resonators 1 to vibrate by virtue of the connection of the resonators 1 to the framework 710.

A plurality of the resonators 1 of the resonator array 700 have the same resonance frequency. This is achieved by the said plurality of resonators 1 having an identical construction, for example identical control elements 20 and identical connection elements 30. In this way, the resonator array 700 is configured to control vibrations of an external body which is known to vibrate at the resonance frequency. Advantageously, in this way the resonator array 700 is configured to control a specific, single, vibrational frequency of the external body.

In another exemplary embodiment, a plurality of the resonators 1 of the resonator array 700 have different resonance frequencies. This is achieved by the said plurality of resonators 1 having different constructions, for example different control elements 20 (i.e. different masses) and/or different connection elements (i.e. formed from different materials or having different thicknesses). In this way, the resonator array 700 may be configured to control a plurality of modes of vibration of an external body. Advantageously, in this way the resonator array 700 is designed to control a plurality of vibrational frequencies of the external body.

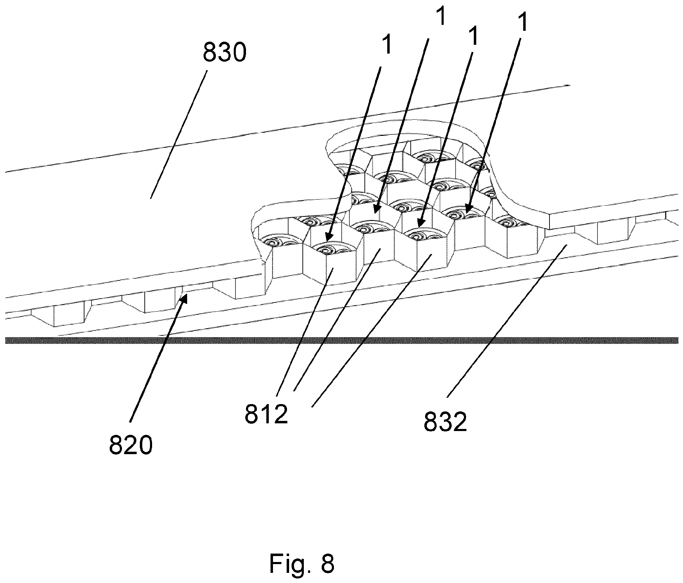

Referring to Figure 8, a resonator array 800 is shown. The resonator array 800 comprises a plurality of resonators 1. In the illustrated embodiment. the resonator array 800 is an array of unconnected resonators 1. Here, the plurality of resonators are not connected by a framework, such as that described above. Alternatively, the resonator array 800 may be an array of resonators 1 connected by a framework.

The resonator array 800 comprises a cell structure 810. The cell structure 810 may be alternatively described as a pocket structure. The cell structure 810 comprises an array of cells 812 or "pockets". Each cell 812 surrounds a resonator 1. The cell structure 810 can connect the upper and lower members of a panel comprising a cavity between the members. This provides for a light and stiff panel. The cell structure 810 may be a honeycomb structure. Advantageously, the cell structure protects the resonators 1 housed within the cells 812 or pockets. In another exemplary embodiment, movement of the surrounded, or "pocketed", resonator 1 is restricted to a single axis by the cell structure, which in this exemplary embodiment is a vertical axis. In an embodiment, the vibration of the resonator 1 can be guided by the cell structure. The same or similar pocketing is, of course, true of any air or other medium in each cell 812, which might simply improve performance (in addition to, or separate from, any restriction of movement of the resonator 1). Nevertheless, the person skilled in the art will appreciate that it may be advantageous for the cell structure 810 not to interact (i.e. contact) the resonators 1 so as not to introduce shock and nonlinearities, which would impact on the response.

In the illustrated embodiment, the resonator array 800 having cell structure 810 is provided in a cavity 820 in a panel 830. The base 10 of each resonator 1 is attached to an inner surface 832 of the panel 830. Vibrations of the panel 830 cause the resonators 1 to move, and the resonators 1 have a damping effect on the vibrations of the panel 830.

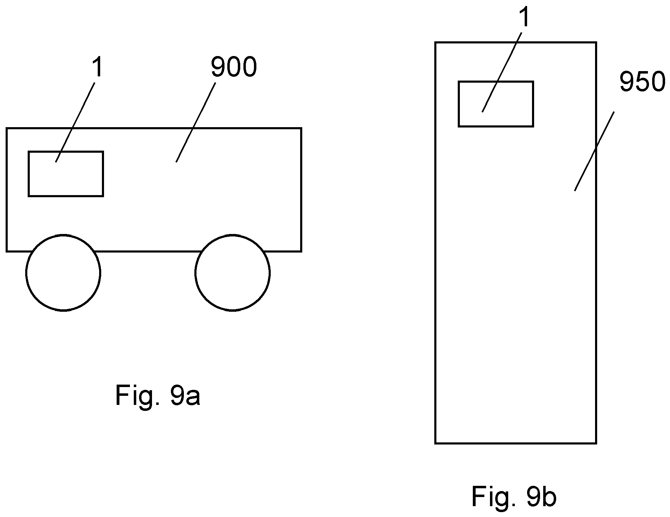

Referring to Figure 9a, a vehicle 900 is shown. The vehicle comprises a resonator 1. The vehicle 900 may alternatively or additionally comprise a resonator array 700, 800, or a vibration control system 100, 200, as described above. Referring to Figure 9b, a structure 950 is shown. The structure 950 comprises a resonator. The structure 950 may alternatively or additionally comprise a resonator array 700, 800, or a vibration control system 100, 200, as described above.

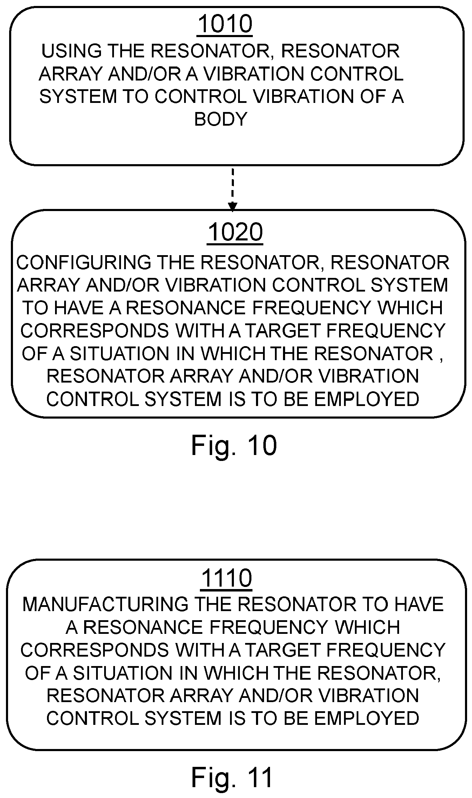

Referring to Figure 10, a method of controlling vibration is illustrated. Step 1010 comprises using a resonator to control vibration of a body. A further, optional, step 1020 comprises configuring the resonator to have a resonance frequency which corresponds with a target frequency of a situation in which the resonator is to be employed.

Referring to Figure 11, a method of manufacturing a resonator is illustrated. Step 1110 comprises manufacturing the resonator to have a resonance frequency which corresponds with a target frequency of a situation in which the resonator is to be employed. A further, optional, step comprises manufacturing the base 10, control element 20 and/or the connecting element 30 by additive layer manufacturing or injection moulding. Two or more of the base 10, control element 20 and the connecting element 30 can be manufactured as a one-piece construction.

## Claims

1. A resonator comprising:
a base attachable to an external body;
a control element; and
one or more connection elements each having a resilient spiral portion,
wherein the control element is resiliently connected to the base by the one or more connection elements such that relative movement between the control element and the base is facilitated by the one or more connection elements.

2. A resonator according to claim 1, comprising an odd number of connection elements.

3. A resonator according to either of claims 1 or 2 comprising a plurality of connection elements, preferably three connection elements.

4. A resonator according to any one of the preceding claims wherein the one or more connection elements each connect to the control element at a point of connection, wherein the points of connection are equidistantly spaced.

5. A resonator according to any one of the preceding claims wherein the control element extends around at least a part of the one or more connection elements when the connection elements are in an equilibrium position.

6. A resonator according to any one of the preceding claims wherein at least a part of the one or more connection elements and the control element are located in the same plane in an equilibrium position.

7. A resonator according to any one of the preceding claims wherein the control element comprises a proof-mass, optionally wherein the control element has an annular form.

8. A resonator array comprising:
a plurality of resonators according to any one of the preceding claims, optionally wherein the bases of the resonators are connected by a framework.

9. A resonator array according to claim 8 wherein two or more of the plurality of resonators have:
the same resonance frequency; and/or
different resonance frequencies.

10. A vibration control system comprising:
a resonator according to any one of claims 1 to 7, or a resonator array according to either of claims 8 or 9.

11. A vibration control system according to claim 10 comprising:
a driving mechanism for providing a displacing force.

12. A vibration control system according to either of claims 10 or 11 comprising:
a tuning mechanism for tuning the resonator.

13. A vehicle or structure comprising: a source of vibration; and a resonator according to any one of claims 1 to 7, a resonator array according to either of claims 8 or 9 and/or a vibration control system according to any one of claims 10 to 12.

14. A method of controlling vibration comprising:
using a resonator according to any one of claims 1 to 7, a resonator array according to either of claims 8 or 9 and/or a vibration control system according to any one of claims 10 to 12 to control vibration of an external body, optionally comprising:
configuring the resonator, resonator array and/or vibration control system to have a resonance frequency which corresponds with a target frequency of a situation in which the resonator, resonator array and/or vibration control system is to be employed.

15. A method of manufacturing a resonator according to any one of claims 1 to 7, a resonator array according to either of claims 8 or 9 and/or a vibration control system according to any one of claims 10 to 12 comprising:
manufacturing the resonator, resonator array and/or vibration control system to have a resonance frequency which corresponds with a target frequency of a situation in which the resonator, resonator array and/or vibration control system is to be employed.
